(19) Europäisches Patentamt
European Patent Office
Office européen des brevets

(11) EP 4 799 811 A1

(12) EUROPEAN PATENT APPLICATION
published in accordance with Art. 153(4) EPC

(43) Date of publication:
**02.09.2026 Bulletin 2026/36**

(21) Application number: **24882199.3**

(22) Date of filing: **10.10.2024**

(51) International Patent Classification (IPC):
***B32B 27/32*** *(2006.01)* ***B65D 65/40*** *(2006.01)*

(52) Cooperative Patent Classification (CPC):
**B32B 27/32; B65D 65/40;** Y02W 30/80

(86) International application number:
**PCT/JP2024/036219**

(87) International publication number:
**WO 2025/089083 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.10.2023 JP 2023183893**

(71) Applicant: **DIC Corporation**
**Tokyo 174-8520 (JP)**

(72) Inventors:
- **KANDA Ryo**
**Tokyo 174-8520 (JP)**
- **HARADA Tomoaki**
**Sakura-shi, Chiba 285-8668 (JP)**

(74) Representative: **Kraus & Lederer PartGmbB**
**Thomas-Wimmer-Ring 15**
**80539 München (DE)**

# (54) GAS-BARRIER LAMINATE AND PACKAGING MATERIAL

(57) The present invention provides a gas barrier laminate including: (A) a layer (A) containing an olefin-based substrate having an inorganic layer formed on at least one surface thereof; and (B) a layer (B) containing an ammonium salt of a resin having a carboxy group and 0.1 to 0.5 chemical equivalents of a polyvalent metal compound with respect to the carboxy group in the ammonium salt of the resin having a carboxy group, in which the layer (B) contains an ammonium salt of a resin (P1) having a carboxy group and a weight average molecular weight of 3,000 to 200,000 and an ammonium salt of a resin (P2) having a carboxy group and a weight average molecular weight of 200,000 to 10,000,000 in a range of P2/P1 = 10 to 2,000, and provides a packaging material.

EP 4 799 811 A1

## Description

TECHNICAL FIELD

The present invention relates to a gas barrier laminate and a packaging material obtained using the gas barrier laminate.

BACKGROUND ART

Packaging materials for use in packaging foods, daily necessities, pharmaceuticals, and the like are required to have functions such as the strength, the resistance to cracks, and the gas barrier property in order to protect the contents from an impact received during distribution or the like, from deterioration due to oxygen or moisture, and the like. Since it is difficult to satisfy these required functions with one kind of material, a laminate obtained by bonding different kinds of polymer materials is widely used as a packaging material.

As a laminated film having the gas barrier property, for example, there is known a gas barrier laminate in which a gas barrier coating liquid, which contains an ammonium salt (A) of a polymer having a carboxy group, a particulate polyvalent metal compound (B), and water, in which the content of the polyvalent metal compound (B) is 0.5 to 2.0 chemical equivalents with respect to the carboxy group in the ammonium salt (A) and the polyvalent metal compound (B) has an average particle diameter of 4 μm or less, is applied onto a substrate and dried to form the coating layer (see, for example, PTL 1). In the gas barrier laminate disclosed in PTL 1, in order to have a function as a packaging material to be distributed, a laminated film of different kinds of resins is evaluated, in which an anchor coating layer is provided on a biaxially oriented polyethylene terephthalate film, a coating layer is formed thereon by applying and drying a gas barrier coating liquid, a biaxially oriented nylon film is dry-laminated on the surface of the coating layer side via a two-component adhesive, and a biaxially oriented nylon film and a non-oriented polypropylene film are dry-laminated via the adhesive (see Examples in PTL 1).

On the other hand, in recent years, not only functional packaging materials but also recyclable packaging materials have been desired. There is an opinion that a laminated film of different kinds of resins that merely take into account functionality has a decrease in quality of recycled plastics, and a packaging material composed of a laminated film of the same kind of resin, such as an olefin-based resin, is expected to be a recyclable packaging material.

In the case where the gas barrier coating liquid disclosed in PTL 1 is combined with a polyolefin resin film, a desired gas barrier property can be obtained, but the flexibility tends to be poor, and in particular, cracks or the like may occur since the coating layer does not follow the bending or elongation of the polyolefin resin film. In addition, the gas barrier coating liquid disclosed in PTL 1 has poor liquid stability when an ammonium salt (A) of a high molecular weight polymer having a carboxy group is used, and the time during which the gas barrier coating liquid can be used is short. When an ammonium salt (A) of a low molecular weight polymer having a carboxy group is used, the film cannot be formed, and the gas barrier property is poor.

CITATION LIST

PATENT LITERATURE

PTL 1: JP2014-94972A

SUMMARY OF INVENTION

TECHNICAL PROBLEM

An object of the invention is to provide a gas barrier laminate that are suitable for obtaining a packaging material having an excellent balance between the gas barrier property and the bendability and able to recycle by using a gas barrier coating liquid having excellent liquid stability and film-forming properties and by combining plastic films such as olefins, and a packaging material.

SOLUTION TO PROBLEM

The present inventors have found that the gas barrier laminate having an excellent balance between the gas barrier property and the bendability can be obtained by combining a layer (B) having the gas barrier property and containing a polyvalent metal compound in a content within a specific range and a layer (A) including an olefin-based substrate having an inorganic layer formed thereon.

Further, the present inventors have found that a gas barrier laminate having more excellent bendability can be obtained by using, as the layer (B), a layer (B) containing a polyvalent metal compound in a content within a specific range and containing a hydroxy group-containing compound such as glycerin.

That is, the invention provides a gas barrier laminate including:

(A) a layer (A) including an olefin-based substrate having an inorganic layer formed on at least one surface thereof; and

(B) a layer (B) containing an ammonium salt of a resin having a carboxy group and 0.1 to 0.5 chemical equivalents of a polyvalent metal compound with respect to the carboxy group in the ammonium salt of the resin having a carboxy group, in which

the layer (B) contains an ammonium salt of a resin (P1) having a carboxy group and a weight average molecular weight of 3,000 to 200,000 and an ammonium salt of a resin (P2) having a carboxy group and a weight average molecular weight of 200,000 to 10,000,000 in a range of P2/P1 = 10 to 2,000.

In addition, the invention provides a packaging material containing the gas barrier laminate described above.

Further, the invention provides a packaging material obtained by laminating the gas barrier laminate described above and a second substrate using an adhesive.

## ADVANTAGEOUS EFFECTS OF INVENTION

According to the invention, it is possible to obtain a gas barrier laminate that are suitable for obtaining a packaging material having an excellent balance between the gas barrier property and the bendability and able to recycle by combining plastic films such as olefins, and a packaging material.

## DESCRIPTION OF EMBODIMENTS

In the present description, "to" means that a value is equal to or greater than a value before "to", and is equal to or less than a value after "to".

### ((A) Layer (A) Including Substrate Having Inorganic Layer Formed on at Least One Surface)

A gas barrier laminate according to the invention includes (A) a layer including a substrate having an inorganic layer formed on at least one surface thereof (hereinafter sometimes referred to as a "layer (A)").

The material, the production method, and the shape of the substrate for use in the layer (A) in the invention are not particularly limited as long as the effects of the invention can be obtained, and a substrate having a film shape (sometimes referred to as a sheet, but referred to as a film in the invention) is often used. Examples of the material of these substrates include materials containing olefin-based resins such as a polyethylene (PE), a polypropylene (PP), a cyclic olefin polymer (COP), and a cyclic olefin copolymer (COC), a polyester, an acrylic, a polycarbonate, a cellulose ester, a polyethylene terephthalate (PET), a polybutylene terephthalate (PBT), nylon (NY), and a biomass-derived component. In particular, any film composed of a thermoplastic resin containing an olefin-based resin as a main component can be used without particular limitation. Specific examples of the olefin-based resin include: polyethylenes such as a low density polyethylene, a medium density polyethylene, a high density polyethylene, and a linear low density polyethylene; olefin resins such as a polypropylene (PP), an ethylene-propylene copolymer, an $\alpha$-olefin polymer, an ethylene-vinyl acetate copolymer, an ethylene-vinyl alcohol copolymer, an ethylene-acrylic acid copolymer, an ethylene-methyl methacrylate copolymer, an ethylene-ethyl acrylate copolymer, a cyclic olefin resin, an ionomer resin, and polymethylpentene; and modified olefin-based resins obtained by modifying an olefin resin with acrylic acid, methacrylic acid, maleic acid anhydride, fumaric acid, or other unsaturated carboxylic acids.

Among these, olefin-based resins such as a polyethylene (PE), a polypropylene (PP), a cyclic olefin polymer (COP), and a cyclic olefin copolymer (COC) are preferably used, and a polyethylene (PE) and a polypropylene (PP) are most preferred since the effects of the invention can be remarkably obtained.

Examples of a film name for food packaging include a polyethylene terephthalate (PET) film, a polystyrene film, a polyamide film, a polyacrylonitrile film, polyolefin films such as a polyethylene film (LLDPE: low density polyethylene film, HDPE: high density polyethylene film, MDOPE: uniaxially oriented polyethylene film, OPE: biaxially oriented polyethylene film) and a polypropylene film (CPP: non-oriented polypropylene film, OPP: biaxially oriented polypropylene film), a polyvinyl alcohol film, and an ethylene-vinyl alcohol copolymer film, and it is also preferable to use a biomass film formed from a material containing a biomass-derived component. The biomass film is commercially available from various companies, and for example, sheets listed in a list of certified biomass products described in Japan Organics Recycling Association can be used.

The substrate for use in the layer (A) is not particularly limited, and may be a substrate having a thickness usually used for packaging foods, daily necessities, pharmaceuticals, and the like. From the viewpoint of moldability and transparency, the thickness of the film is sufficiently in the range of 1 μm to 500 μm, preferably 1 μm to 300 μm, and more preferably 1 μm to 100 μm. When the thickness is less than 1 μm, the strength is insufficient, and when the thickness is more than 500 μm, the rigidity is too high, and there is a concern that the processing is difficult.

The method for producing these substrates is not particularly limited, and these substrates can be produced using various film forming methods such as a melt extrusion molding method, a solution casting molding method, and a calender molding method, and these substrates may be subjected to biaxial orientation or uniaxial orientation treatment. In addition, a film subjected to various surface treatments may be used as necessary.

The layer (A) is a layer including a substrate layer having an inorganic layer formed on at least one surface thereof, and the inorganic layer is formed on a part or the entire surface of at least one surface of a substrate. An inorganic substance forming the inorganic layer is not particularly limited as long as the effects of the invention can be obtained. It is preferable to use one or more kinds selected from metals and metal oxides such as aluminum oxide, silicon oxide, aluminum, zinc oxide, magnesium oxide, calcium oxide, and zirconium oxide, and it is particularly preferable to use one or more kinds selected from aluminum oxide, silicon oxide, aluminum, zinc oxide, and magnesium oxide since the barrier property is favorably exhibited.

In the layer (A) in the invention, the method for forming the inorganic layer is not particularly limited as long as the effects of the invention can be obtained. The inorganic layer can be formed by a vapor deposition treatment, a sputtering treatment, a CVD treatment, or a coating treatment, and it is particularly preferable to use a vapor deposition treatment or a sputtering treatment since the inorganic layer can be formed uniformly.

In addition, before forming the inorganic layer, an anchor coating layer can be provided on the substrate layer. The anchor coating layer may be a coating layer obtained by applying a known anchor coating agent. For example, an anchor coating agent containing a resin such as an acrylic resin, a urethane-based resin, a vinyl alcohol-based resin, or an ethylene vinyl alcohol-based resin as a main component, or a curable anchor coating agent containing an isocyanate-based or epoxy-based curing agent in combination can be used. The thickness of the anchor coating layer is not particularly limited, and is often provided in the range of, for example, 0.01 μm to 0.5 μm.

The thickness of the inorganic layer may be any as long as the effects of the invention can be obtained, and is preferably in the range of 1 nm to 100 nm, and more preferably in the range of 3 nm to 80 nm.

From the viewpoint of recycling, the layer configuration is preferably as simple as possible, and from the viewpoint of the distribution of the packaging material, printing for displaying the description and the name of the contents and products of the packaging material is often required. Printing is often performed on the substrate.

(Printing Layer)

A printing layer is a layer on which characters, figures, symbols, and other desired patterns are printed. A printing method and a printing ink are not particularly limited, and known printing methods and printing inks can be used. For the film used as the substrate, printing inks using a gravure printing method, a flexographic printing method, a lithographic offset printing method, an inkjet recording printing method, and the like are often used. In addition, printing inks using these printing methods combined with a method of curing with active energy rays such as an ultraviolet (UV), a LED, and an electron beam (EB), a method of curing with heat, and the like are also used. In addition, depending on a solvent to be used, the printing ink may be referred to as an aqueous ink or an organic solvent type ink.

Specific examples thereof include a gravure printing ink and a flexographic printing ink (the gravure printing ink and the flexographic printing ink may be referred to as a liquid printing ink in the industry), an ultraviolet curable ink for lithographic offset printing, an electron beam curable ink for lithographic offset printing, an ultraviolet curable ink for inkjet recording printing, and an electron beam curable ink for inkjet recording printing.

The position where the printing layer printed using these inks is provided is freely set. The printing layer may be provided on the first substrate, or a substrate on which the printing layer is separately provided may be one of the constituent components of the laminate according to the invention and the position thereof is freely set. In addition, the ink may contain a resin, a colorant, and a solvent as essential components, or may be a so-called clear ink containing a resin and a solvent and substantially containing no colorant.

Hereinafter, the liquid printing ink most often used for printing on a film will be described.

The resin for use in the liquid printing ink is not particularly limited, and examples thereof include an acrylic resin, a polyester resin, a styrene resin, a styrene-maleic acid resin, a maleic acid resin, a polyamide resin, a polyurethane resin, a vinyl chloride-vinyl acetate copolymer resin, a vinyl chloride-acrylic copolymer resin, an ethylene-vinyl acetate copolymer resin, a vinyl acetate resin, a polyvinyl chloride resin, a chlorinated polypropylene resin, a cellulose-based resin, an epoxy resin, an alkyd resin, a rosin-based resin, a rosin-modified maleic acid resin, a ketone resin, a cyclized rubber, a chlorinated rubber, butyral, and a petroleum resin. One kind or two or more kinds of these can be used in combination. It is preferable to use at least one kind or two or more kinds selected from a polyurethane resin, a vinyl chloride-vinyl acetate copolymer

resin, and a cellulose-based resin.

Examples of the colorant for use in the liquid printing ink include: inorganic pigments such as titanium oxide, red iron oxide, antimony red, cadmium red, cadmium yellow, cobalt blue, deep blue, ultramarine blue, carbon black, and graphite; organic pigments such as a soluble azo pigment, an insoluble azo pigment, an azo lake pigment, a condensed azo pigment, a copper phthalocyanine pigment, and a condensed polycyclic pigment; and extender pigments such as calcium carbonate, kaolin clay, barium sulfate, aluminum hydroxide, and talc.

The liquid printing ink for film printing is often an organic solvent type ink. The organic solvent to be used preferably does not contain an aromatic hydrocarbon-based organic solvent. More specific examples thereof include: alcohol-based organic solvents such as methanol, ethanol, n-propanol, isopropanol, and butanol; ketone-based organic solvents such as acetone, methyl ethyl ketone, and methyl isobutyl ketone; ester-based organic solvents such as methyl acetate, ethyl acetate, propyl acetate, and butyl acetate; aliphatic hydrocarbon-based organic solvents such as n-hexane, n-heptane, and n-octane; and alicyclic hydrocarbon-based organic solvents such as cyclohexane, methylcyclohexane, ethylcyclohexane, cycloheptane, and cyclooctane. One kind or two or more kinds of these can be used in combination.

(Gas Barrier Layer (B))

The invention is characterized by including the layer (A) and a layer (B) having a gas barrier property (hereinafter sometimes referred to as a gas barrier layer (B)). The gas barrier layer (B) contains an ammonium salt of a resin having a carboxy group and 0.1 to 0.5 chemical equivalents of a polyvalent metal compound with respect to the carboxy group in the ammonium salt of the resin having a carboxy group.

(Resin Having Carboxy Group)

In the resin having a carboxy group (also referred to as a carboxylic acid group) for use in the invention, the carboxy group may be a carboxylic acid anhydride.

(Acid Value)

The resin having a carboxy group preferably has an acid value of 50 mgKOH/g to 1,000 mgKOH/g since the barrier performance is improved. The acid value is particularly preferably 80 mgKOH/g to 900 mgKOH/g. When the acid value is 80 mgKOH/g or more, ion bonding proceeds sufficiently, and a high barrier performance can be obtained.

(Acid Value Measurement Method)

The acid value is mg of potassium hydroxide necessary for neutralizing the acid content present in 1 g of a sample. Specifically, the acid value can be measured by a method in which a weighed sample is dissolved in an appropriate solvent in which the sample is soluble, for example, a solvent of toluene/methanol = 70/30 in volume ratio, and several drops of a 1% phenolphthalein alcohol solution are added thereto, and then a 0.1 mol/L potassium hydroxide alcohol solution is added dropwise thereto to check the point of discoloration, and can be calculated using the following equation.

Acid Value Measurement Method 1

$$\text{Acid value (mgKOH/g)} = (V \times F \times 5.61)/S$$

V: used amount (mL) of 0.1 mol/L potassium hydroxide alcohol solution
F: titer of 0.1 mol/L potassium hydroxide alcohol solution
S: sample collection amount (g)
5.61: potassium hydroxide equivalent amount (mg) in 1 mL of 0.1 mol/L potassium hydroxide alcohol solution

In the case where the sample is a resin solution, the resin acid value (mgKOH/g) can be determined according to the following calculation equation.

$$\text{Resin acid value (mgKOH/g)} = \text{resin solution acid value (mgKOH/g)}/\text{NV (\%)} \times 100$$

NV: nonvolatile content (%)

In addition, in the case where the solubility of the sample in an organic solvent is low and the measurement is difficult due to precipitation or the like, the acid value can be measured by using the following method.

Acid Value Measurement Method 2

The acid value (mgKOH/g-resin) is a value calculated according to the following equation using a coefficient (f) obtained from a calibration curve prepared using FT-IR (FT-IR4200 manufactured by JASCO Corporation) and a chloroform solution of maleic acid anhydride, and an absorbance (I) of a stretching peak (1780 $cm^{-1}$) of the anhydride ring of the maleic acid anhydride and an absorbance (II) of a stretching peak (1720 $cm^{-1}$) of a carbonyl group in maleic acid in a maleic acid anhydride-modified polyolefin solution.

Acid value (mgKOH/g-resin) = [(absorbance (I) $\times$ (f) $\times$ 2 $\times$ molecular weight of potassium hydroxide $\times$ 1000 (mg) + absorbance (II) $\times$ (f) $\times$ molecular weight of potassium hydroxide $\times$ 1000 (mg))/molecular weight of maleic acid anhydride]

Molecular weight of maleic acid anhydride: 98.06, molecular weight of potassium hydroxide: 56.11

(Molecular Weight)

The invention is characterized in that the resin having a carboxy group to be used is a mixture of a resin (P1) having a weight average molecular weight of 3,000 to 200,000 and a resin (P2) having a weight average molecular weight of 200,000 to 10,000,000. By using this mixture, the liquid stability of a coating agent for forming the gas barrier layer (B) to be described later is improved. As for the ratio of the mixture, P2/P1 is preferably in the range of 10 to 2,000, and more preferably in the range of 30 to 500.

The weight average molecular weight of the resin having a carboxy group in the invention is a value calculated by measurement by using a gel permeation chromatograph (GPC) method, specifically a value measured by using the following method.

The measurement of the weight average molecular weight (in terms of pullulan) by using GPC in the invention is performed using an L20 system manufactured by Shimadzu Corporation under the following conditions.

Separation column: Shodex OHpak SB-806MHQ
Column temperature: 40°C
Mobile phase: 0.2 mol/L sodium nitrate aqueous solution
Flow rate: 0.70 mL/min
Sample injection amount: 50 μL
Detector: RI, UV wavelength: 254 nm

The resin (P1) especially has a weight average molecular weight of preferably in the range of 5,000 to 150,000, and more preferably in the range of 6,000 to 100,000.

On the other hand, the resin (P2) especially has a weight average molecular weight of preferably in the range of 300,000 to 5,000,000, and more preferably in the range of 400,000 to 2,000,000.

The resin having a carboxy group for use in the invention is preferably neutralized with ammonium to form an ammonium salt. Whether the resin is neutralized can be determined based on the pH, and the pH of a 15% aqueous solution of the resin having a carboxy group is preferably 7.0 to 9.0. When the pH is less than 7.0, the unneutralized resin having a carboxy group reacts with a metal ion in the polyvalent metal compound to form an aggregate. On the other hand, when the pH is more than 9.0, there is a concern that odor due to ammonia is a problem.

The ammonium for use in the neutralization is not particularly limited, and for example, a commonly sold 30% ammonia aqueous solution or the like can be used.

The resin having a carboxy group is not particularly limited in the resin skeleton, and a known resin can be used. Among them, a carboxy group-containing vinyl resin is preferred.

(Carboxy Group-containing Vinyl Resin)

Examples of the carboxy group-containing vinyl resin include a polymer of a polymerizable unsaturated monomer having a carboxy group. Examples of the polymerizable unsaturated monomer having a carboxy group include: unsaturated carboxylic acids such as (meth)acrylic acid, 2-carboxyethyl (meth)acrylate, crotonic acid, itaconic acid, maleic acid, or fumaric acid;

monoesters (half esters) of various unsaturated dicarboxylic acids such as monomethyl itaconate, mono-n-butyl itaconate, monomethyl maleate, mono-n-butyl maleate, monomethyl fumarate, and mono-n-butyl fumarate with saturated monohydric alcohols;
monovinyl esters of various saturated dicarboxylic acids such as monovinyl adipate or monovinyl succinate;
addition reaction products of anhydrides of various saturated polycarboxylic acids, such as succinic acid anhydride, glutaric acid anhydride, phthalic acid anhydride, and trimellitic acid anhydride, with various hydroxy group-containing vinyl-based monomers; and various monomers obtained by an addition reaction of various carboxy group-containing monomers as described above with lactones.

The resin having a carboxy group for use in the invention may be a homopolymer of the polymerizable unsaturated monomer having a carboxy group described above, or a copolymer using a plurality of polymerizable unsaturated monomers having a carboxy group. In addition, it may be a copolymer of the polymerizable unsaturated monomer having a carboxy group and another monomer copolymerizable therewith.
Examples of the monomer copolymerizable with the polymerizable unsaturated monomer having a carboxy group include the following.

(1) (meth)acrylic acid esters having an alkyl group having 1 to 22 carbon atoms, such as methyl (meth)acrylate, ethyl (meth)acrylate, propyl (meth)acrylate, n-butyl (meth)acrylate, t-butyl (meth)acrylate, hexyl (meth)acrylate, heptyl (meth)acrylate, octyl (meth)acrylate, nonyl (meth)acrylate, decyl (meth)acrylate, dodecyl (meth)acrylate, tetradecyl (meth)acrylate, hexadecyl (meth)acrylate, stearyl (meth)acrylate, octadecyl (meth)acrylate, and docosyl (meth) acrylate;
(2) (meth)acrylic acid esters having an aliphatic alkyl group, such as cyclohexyl (meth)acrylate, isobornyl (meth) acrylate, dicyclopentanyl (meth)acrylate, and dicyclopentenyloxyethyl (meth)acrylate;
(3) (meth)acrylic acid esters having an aromatic ring, such as benzoyloxyethyl (meth)acrylate, benzyl (meth)acrylate, phenylethyl (meth)acrylate, phenoxyethyl (meth)acrylate, phenoxydiethylene glycol (meth)acrylate, and 2-hydroxy-3-phenoxypropyl (meth)acrylate;
(4) acrylic acid esters having a hydroxyalkyl group, for example, (meth)acrylic acid esters having a polyalkylene glycol group, such as hydroxyethyl (meth)acrylate, hydroxypropyl (meth)acrylate, hydroxybutyl (meth)acrylate, glycerol (meth)acrylate, lactone-modified hydroxyethyl (meth)acrylate, polyethylene glycol (meth)acrylate, and polypropylene glycol (meth)acrylate;
(5) unsaturated dicarboxylic acid esters such as dimethyl fumarate, diethyl fumarate, dibutyl fumarate, dimethyl itaconate, dibutyl itaconate, methyl ethyl fumarate, methyl butyl fumarate, and methyl ethyl itaconate;
(6) styrene derivatives such as styrene, $\alpha$-methylstyrene, and chlorostyrene;
(7) diene-based compounds such as butadiene, isoprene, piperylene, and dimethylbutadiene;
(8) vinyl halides and vinylidene halides such as vinyl chloride and vinyl bromide;
(9) unsaturated ketones such as methyl vinyl ketone and butyl vinyl ketone;
(10) vinyl esters such as vinyl acetate and vinyl butyrate;
(11) vinyl ethers such as methyl vinyl ether and butyl vinyl ether;
(12) acrylonitrile, methacrylonitrile, vinyl cyanides such as vinylidene cyanide;
(13) acrylamides and alkyd-substituted amides thereof;
(14) N-substituted maleimides such as N-phenylmaleimide and N-cyclohexylmaleimide;
(15) fluorine-containing ethylenically unsaturated monomers, for example, fluorine-containing $\alpha$-olefins such as vinyl fluoride, vinylidene fluoride, trifluoroethylene, chlorotrifluoroethylene, bromotrifluoroethylene, pentafluoropropylene, or hexafluoropropylene, (per)fluoroalkyl perfluorovinyl ethers having a (per)fluoroalkyl group having 1 to 18 carbon atoms, such as trifluoromethyl trifluorovinyl ether, pentafluoroethyl trifluorovinyl ether, or heptafluoropropyl trifluorovinyl ether, or (per)fluoroalkyl (meth)acrylates having a (per)fluoroalkyl group having 1 to 18 carbon atoms, such as 2,2,2-trifluoroethyl (meth)acrylate, 2,2,3,3-tetrafluoropropyl (meth)acrylate, 1H,1H,5H-octafluoropentyl (meth)acrylate, 1H,1H,2H,2H-heptadecafluorodecyl (meth)acrylate, or perfluoroethyloxyethyl (meth)acrylate;
(16) silyl group-containing (meth)acrylates such as $\gamma$-methacryloxypropyltrimethoxysilane; and (17) N,N-dialkylaminoalkyl (meth)acrylates such as N,N-dimethylaminoethyl (meth)acrylate, N,N-diethylaminoethyl (meth)acrylate, or N,N-diethylaminopropyl (meth)acrylate. These polymerizable unsaturated monomers may be used alone or in combination of two or more kinds thereof.

The resin having a carboxy group is obtained by polymerization (copolymerization) using a known and commonly used method, and the copolymerization form is not particularly limited. The resin can be produced by addition polymerization in the presence of a catalyst (polymerization initiator), and may be any of a random copolymer, a block copolymer, a graft copolymer, and the like. In addition, as the copolymerization method, known polymerization methods such as a bulk polymerization method, a solution polymerization method, a suspension polymerization method, and an

emulsion polymerization method can be used.

The content of the ammonium salt of the resin having a carboxy group is preferably 45 mass% to 95 mass%, and more preferably 55 mass% to 93 mass%, with respect to the solid content of the layer (B).

(Polyvalent Metal Compound)

The polyvalent metal compound for use in the invention is preferably a divalent metal compound. Examples of the divalent metal compound include a zinc compound, a magnesium compound, a calcium compound, a manganese compound, an iron compound, a cobalt compound, a nickel compound, and a copper compound, and a zinc compound, a magnesium compound, and a calcium compounds are particularly preferred. These metal compounds may be used alone or in combination of two or more kinds thereof.

The divalent metal compound is preferably an oxide, a hydroxide, or a carbonate of a divalent metal, and may be a mixture thereof.

Specific compounds of a divalent metal compound (B) include preferably zinc oxide, magnesium oxide, and calcium oxide, and particularly preferably zinc oxide and magnesium oxide.

The divalent metal compound is preferably in the form of particles. More preferably, fine particles having an average particle diameter of 10 nm or more and 500 nm or less. Particularly preferably, fine particles of 20 nm to 300 nm. Here, the average particle diameter can be measured using a dynamic light scattering particle size distribution analyzer, for example, LB-500 (manufactured by Horiba, Ltd.).

The polyvalent metal compound is preferably contained to be 0.1 to 0.5 chemical equivalents with respect to the carboxy group in the ammonium salt of the resin having a carboxy group.

Among them, the polyvalent metal compound is preferably contained to be 0.2 to 0.48 chemical equivalents, and more preferably 0.3 to 0.46 chemical equivalents. When it is less than 0.1 equivalents, crosslinking of the resin having a carboxy group by the metal ion in the polyvalent metal compound is insufficient, so that the gas barrier property is lowered. When it is more than 0.5 equivalents, the coating film is hard due to ionic crosslinking, and the gas barrier layer (B) does not follow the bending or elongation of the polyolefin resin film, resulting in cracks or the like.

In the invention, the chemical equivalent is calculated as follows.

For example, the molecular weight of one unit of an ammonium salt of a polyacrylic acid, which is the resin having a carboxy group, is 89. In general, one molecule of zinc oxide (molecular weight: 81.4), which is the polyvalent metal compound, reacts with two molecules of one unit of ammonium polyacrylate (twice the molecular weight of 89), to form a salt. A formulation in which weight of ammonium polyacrylate: weight of zinc oxide = 178/81.4 = 100/45.7 is referred to as 1 equivalent of zinc oxide.

(Additive)

The gas barrier layer (B) may contain various additives in addition to the resin having a carboxy group and the polyvalent metal compound. Examples of the additive include a hydroxy group-containing compound, a coupling agent, a silane compound, a phosphoric acid compound, an organic filler, an inorganic filler, a stabilizer (an antioxidant, a heat stabilizer, an ultraviolet absorber, or the like), a plasticizer, an antistatic agent, a lubricant, an anti-blocking agent, a colorant, a crystal nucleating agent, an oxygen scavenger (a compound having an oxygen trapping function), and a tackifier. These various additives may be used alone or in combination of two or more kinds thereof.

(Hydroxy Group-containing Compound)

The gas barrier layer (B) preferably contains a hydroxy group-containing compound having a boiling point of 120°C or higher, and preferably a hydroxy group-containing compound having a plasticizing effect on the resin and/or a hydroxy group-containing compound having improved coatability of an aqueous material on the substrate. Examples of the hydroxy group-containing compound functioning as a plasticizer include butanol, hexanol, pentanol, ethylene glycol, trimethylene glycol, propylene glycol, tetramethylene glycol, 1,3-butanediol, 2,3-butanediol, pentamethylene glycol, hexamethylene glycol, diethylene glycol, triethylene glycol, polyethylene glycol, a polyvinyl alcohol, an ethylene-vinyl alcohol copolymer, polyethylene oxide, sorbitol, mannitol, dulcitol, erythritol, glycerin, lactic acid, a fatty acid, starch, and a phthalic acid ester. Among them, glycerin is preferred. Examples of the hydroxy group-containing compound functioning as a wetting agent include: acetylene glycol, an ethylene oxide adduct of acetylene alcohol, an ethylene oxide adduct of acetylene glycol, an ethylene oxide-propylene oxide block copolymer, ether-based compounds such as polyoxyethylene nonylphenyl ether, polyoxyethylene octylphenyl ether, polyoxyethylene dodecylphenyl ether, a polyoxyethylene alkyl allyl ether, polyoxyethylene oleyl ether, polyoxyethylene lauryl ether, a polyoxyethylene alkyl ether, and a polyoxyalkylene alkyl ether; ester-based compounds such as polyoxyethylene oleate, polyoxyethylene distearate, sorbitan laurate, sorbitan monostearate, sorbitan monooleate, sorbitan sesquioleate, polyoxyethylene monooleate, and polyoxyethylene stearate;

silicon compounds such as dimethylpolysiloxane; and fluorine-containing compounds such as a fluoroalkyl ester and a perfluoroalkyl carboxylate. Among them, acetylene glycol, an ethylene oxide adduct of acetylene glycol, and an ethylene oxide-propylene oxide block copolymer are preferred. When the boiling point is 120°C or higher, the volatilization of the hydroxy group-containing compound can be prevented.

The hydroxy group-containing compound may have a carbonyl group, and is preferably neutralized with an amine such as ammonium or an alkali metal such as sodium or potassium. With the neutralization, it is possible to prevent the aggregation of the hydroxy group-containing compound with the metal ion in the polyvalent metal compound.

The hydroxy group-containing compound contributes to the stretchability and the bendability of the layer (B), and forms a layer that easily follows the layer (A) including the olefin-based substrate having the inorganic layer formed thereon, thereby improving the abuse resistance.

The content of the hydroxy group-containing compound is preferably 0.04 mass% to 15 mass%, and more preferably 0.05 mass% to 10 mass%, with respect to the solid content of the layer (B). When the content is less than 0.04 mass%, the stretchability of the gas barrier layer (B) and/or the coatability of the aqueous material on the substrate cannot be enhanced, and there is a concern that the abuse resistance is not improved. When the content is more than 15 mass%, there is a concern that problems such as migration and bleed-out occur.

It is preferable that the gas barrier layer (B) contains at least one kind of compound (S) selected from the group consisting of a silicon compound represented by a general formula (s1) and a hydrolysate thereof since not only the gas barrier property but also the appearance of a pouch after retort can be maintained. By containing the compound (S), the hot water resistance after the pouch is formed can be improved.

$$(R^1O)_3Si\text{-}(CH_2)_n\text{-}R^2 \;\ldots\ldots \qquad (s1)$$

In the general formula (s1), $R^1$ represents an alkyl group. The alkyl group preferably has 1 to 10 carbon atoms, more preferably 1 to 5 carbon atoms, and is most preferably an alkyl group having 1 to 3 carbon atoms. Examples of such an alkyl group include a methyl group, an ethyl group, and a propyl group.

In the general formula (s1), $R^2$ is an organic group having an epoxy group or an amino group. Among them, $R^2$ is preferably an organic group having an amino group, and more preferably an amino group having two or more nitrogen atoms. Specific examples thereof include a glycidoxy group, a 3,4-epoxycyclohexyl group, an amino group, an N-phenylamino group, and an N-2-(aminoethyl)amino group.

In the general formula (s1), n is an integer of 1 to 10. Among them, n is preferably 3 to 10, more preferably 4 to 10, and still more preferably 6 to 10.

Specific examples of the compound (S) include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, 8-glycidoxyoctyltrimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, and N-2-(aminoethyl)-8-aminooctyltrimethoxysilane.

Among them, 3-glycidoxypropyltrimethoxysilane, 8-glycidoxyoctyltrimethoxysilane, 3-aminopropyltriethoxysilane, and N-2-(aminoethyl)-8-aminooctyltrimethoxysilane are preferable, 3-aminopropyltriethoxysilane and N-2-(aminoethyl)-8-aminooctyltrimethoxysilane are more preferred, and N-2-(aminoethyl)-8-aminooctyltrimethoxysilane is most preferred.

The compound (S) is contained in an amount of preferably 10 mass% to 30 mass%, and more preferably 11 mass% to 28 mass%, with respect to the solid content of the gas barrier layer (B). When the amount is less than 10 mass%, it may be difficult to obtain the effect of maintaining the appearance after retort. On the other hand, when the amount is more than 30 mass%, there is a concern that the liquid stability of the coating agent for forming the gas barrier layer (B) to be described later deteriorates.

(Volatile Solvent)

Since the gas barrier layer (B) is formed as a coating film obtained by coating and drying on the layer (A), the coating agent for forming the gas barrier layer (B) (hereinafter, the coating agent for forming the gas barrier layer (B) is referred to as a coating agent (B)) preferably contains a volatile solvent. The volatile solvent is not particularly limited. From the viewpoint of the drying property and the solubility of the ammonium salt of the resin having a carboxy group, it is preferable to use water or one kind or a combination of two or more kinds of water-soluble organic solvents having a boiling point of lower than 120°C, and examples thereof include alcohol-based organic solvents such as ethanol, n-propanol, isopropyl alcohol, and butanol, ketone-based organic solvents such as acetone, methyl ethyl ketone, and methyl isobutyl ketone, and ester-based organic solvents such as methyl acetate and ethyl acetate.

In the coating agent (B), the nonvolatile content is preferably 0.5% to 20% in the composition. In addition, the total

amount of a resin (A) having a carboxy group and the divalent metal compound (B) is preferably 70% to 100% in the total amount of the nonvolatile content. Within this range, the gas barrier property can be sufficiently exhibited. It is particularly preferably 80% to 100%.

As the coupling agent, a known and commonly used coupling agent can be used, and examples thereof include a silane coupling agent, a titanium coupling agent, a zirconium coupling agent, and an aluminum coupling agent.

As the silane coupling agent, a known and commonly used silane coupling agent may be used, and examples thereof include: (meth)acryloyl group-containing silane coupling agents such as 3-acryloxypropyltrimethoxysilane and 3-methacryloxypropyltriethoxysilane; and isocyanate group-containing silane coupling agents such as 3-isocyanatepropyltriethoxysilane.

Examples of the titanium coupling agent include isopropyl triisostearoyl titanate, isopropyl trioctanoyl titanate, isopropyl dimethacryl isostearoyl titanate, isopropyl isostearoyl diacryl titanate, isopropyl tris(dioctylpyrophosphate) titanate, tetraoctyl bis(ditridecylphosphite) titanate, tetra(2,2-diallyloxymethyl-1-butyl) bis(ditridecyl)phosphite titanate, bis(dioctylpyrophosphate)oxyacetate titanate, bis(dioctylpyrophosphate)ethylene titanate, a titanium lactate ammonium salt, titanium lactate, titanium triethanolaminate, titanium lactate, a titanium lactate ammonium salt, titanium diethanolaminate, and titanium aminoethylaminoethanolate.

Examples of the zirconium coupling agent include zirconium acetate, ammonium zirconium carbonate, zirconium fluoride, a zirconyl chloride compound, and a zirconium lactate ammonium salt.

Examples of the aluminum coupling agent include acetoalkoxy aluminum diisopropylate, aluminum diisopropoxymonoethyl acetoacetate, aluminum trisethylacetoacetate, and aluminum trisacetylacetonate.

Examples of the silane compound include an alkoxysilane, a silazane, and a siloxane. Examples of the alkoxysilane include methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, octyltriethoxysilane, decyltrimethoxysilane, 1,6-bis(trimethoxysilyl)hexane, and trifluoropropyltrimethoxysilane. Examples of the silazane include hexamethyldisilazane. Examples of the siloxane include a hydrolyzable group-containing siloxane.

Among the additives, examples of the inorganic filler include inorganic substances such as a metal, a metal oxide, a resin, and a mineral, and a composite thereof. Specific examples of the inorganic filler include silica, alumina, titanium, zirconia, copper, iron, silver, mica, talc, aluminum flakes, glass flakes, and clay mineral.

Examples of the compound having an oxygen trapping function include a hindered phenol-based compound, vitamin C, vitamin E, an organophosphorus compound, a low molecular weight organic compound reactive with oxygen such as gallic acid and pyrogallol, and a transition metal compound such as cobalt, manganese, nickel, iron, and copper.

Examples of the tackifier include a xylene resin, a terpene resin, a phenol resin, and a rosin resin. Adding a tackifier can improve the adhesiveness to various substrates immediately after coating. The addition amount of the tackifier is preferably 0.01 to 5 parts by mass with respect to 100 parts by mass of the total amount of a resin composition.

As a procedure for producing the coating agent (B), it is preferable in terms of liquid stability that the polyvalent metal compound is subjected to a dispersion treatment in an aqueous solution of the resin (P1) having a carboxy group and having a weight average molecular weight of 3,000 to 200,000, and the obtained dispersion liquid is mixed with a solvent such as water or an alcohol, the resin (P2) having a carboxy group and having a weight average molecular weight of 200,000 to 10,000,000, and an additive such as a hydroxy group-containing compound.

In the gas barrier layer (B), a laminate having a gas barrier property can be obtained by coating the layer (A) with the coating agent (B). When the inorganic layer of the layer (A) is coated with the coating agent (B), the volatile solvent is removed, whereby the resin having a carboxy group and the polyvalent metal compound form an ion bond, and the barrier property is exhibited by the crosslinked structure.

The thickness of the gas barrier layer (B) is not particularly limited as long as the effects of the invention can be obtained, and is preferably in the range of 0.05 μm to 1 μm, and more preferably in the range of 0.1 μm to 0.5 μm. This is achieved by coating using the coating agent (B) in an amount of about 0.05 g/m$^2$ to 1 g/m$^2$ in terms of solid content.

The coating method of the coating agent (B) is not particularly limited, and a known and commonly used coating method can be used. Examples thereof include a spray method, a spin coating method, a dipping method, a roll coating method, a blade coating method, a doctor roll method, a doctor blade method, a curtain coating method, a slit coating method, a screen printing method, an inkjet method, and a dispensing method, and in particular, coating by a roll coating method using a gravure coater is preferred since a coating film is satisfactorily formed.

In the gas barrier layer (B) obtained by coating using the coating agent (B), the ion bond in the coating layer is denser by drying after coating. Therefore, it is preferable to provide a drying step after the coating. The drying step may be room temperature drying, or forced drying such as heating, pressure reduction, or blowing may be performed.

(Second Substrate)

The laminate including the layer (A) and the gas barrier resin layer (B) may be bonded to a second substrate using

an adhesive. Alternatively, the second substrate may be formed on the laminate by using an extrusion method.

As the second substrate, a same kind substrate as the layer (A) may be used, or a different substrate may be used. In the case where the laminate according to the invention is applied to a packaging material, it is assumed that the second substrate is used as a sealant layer, and a polyolefin-based resin having heat sealability can be selected as the second substrate. Examples thereof include: polyethylene resins such as a low density polyethylene (LDPE), a linear low density polyethylene (LLDPE), a very low density polyethylene (VLDPE), a polypropylene (CPP), an ethylene-propylene copolymer, and polymethylpentene; ethylene-based copolymers such as an ethylene-vinyl acetate copolymer (EVA), an ethylene-methyl methacrylate copolymer (EMMA), an ethylene-ethyl acrylate copolymer (EEA), an ethylene-methyl acrylate copolymer (EMA), an ethylene-ethyl acrylate-maleic acid anhydride copolymer (E-EA-MAH), an ethylene-acrylic acid copolymer (EAA), and an ethylene-methacrylic acid copolymer (EMAA); ionomers of an ethylene-acrylic acid copolymer; and ionomers of an ethylene-methacrylic acid copolymer. One kind of these may be used, or two or more kinds of these may be mixed and used in combination.

In the case where a second layer is a heat seal layer, the thickness thereof can be appropriately adjusted according to the purpose, and is, for example, 1 μm to 10 μm, and more preferably 3 μm to 10 μm from the viewpoint of the aroma retaining property and the heat sealability.

(Adhesive)

The adhesive used in the case of bonding the second layer to the laminate including the layer (A) and the gas barrier resin layer (B) may be any adhesive that can be used in a general-purpose lamination method. Examples of the lamination method include dry lamination, wet lamination, non-solvent lamination, and extrusion lamination methods. The adhesive forms an adhesive layer after curing or drying.

As the adhesive used in the dry lamination, it is possible to use, for example, a solvent type, an aqueous type, or an emulsion type adhesive such as a one-component or two-component curable or non-curable vinyl-based, (meth)acryl-based, polyamide-based, polyester-based, polyether-based, polyurethane-based, epoxy-based, or rubber-based adhesive. As the two-component curable adhesive, a two-component curable adhesive of a polyol and an isocyanate compound can be used. Examples of the coating method using the adhesive for lamination include a direct gravure roll coating method, a gravure offset roll coating method, a kiss coating method, a reverse roll coating method, a fountain method, a transfer roll coating method, and other methods. For example, DIC-DRY series manufactured by DIC Corporation can be preferably used.

In addition, various adhesives can also be used, and a pressure-sensitive adhesive is preferably used. Examples of the pressure-sensitive adhesive include: a rubber-based adhesive obtained by dissolving a polyisobutylene rubber, a butyl rubber, or a mixture thereof in an organic solvent such as benzene, toluene, xylene, or hexane; those obtained by blending these rubber-based adhesives with a tackifier such as an abietic acid rosin ester, a terpene-phenol copolymer, or a terpene-indene copolymer; or an acrylic adhesive obtained by dissolving, in an organic solvent, an acrylic copolymer having a glass transition point of - 20°C or lower, such as a 2-ethylhexyl acrylate-n-butyl acrylate copolymer or a 2-ethylhexyl acrylate-ethyl acrylate-methyl methacrylate copolymer.

In the adhesive, an adhesive having functionality may be used. For example, as the adhesive having a gas barrier property, the oxygen barrier adhesive pass rims (PASLIM) series manufactured by DIC Corporation, which is a two-component reactive adhesive of a polyester polyol and an isocyanate compound, can be used. The gas barrier adhesive forms a gas barrier adhesive layer after curing or drying.

The use of the gas barrier adhesive is preferred since the gas barrier property of the laminate according to the invention can be further improved.

In the case where the adhesive is a solvent type, one substrate is coated with the adhesive using a roll such as a gravure roll, the organic solvent is volatilized by heating in an oven or the like, and then the other substrate is bonded to obtain the laminate according to the invention. It is preferable to perform an aging treatment after the lamination. The aging temperature is preferably room temperature to 80°C, and the aging time is preferably 12 hours to 240 hours.

In the case where the adhesive is a solvent-free type, one substrate is coated, using a roll such as a gravure roll, with an adhesive having the aroma retaining property that has been heated to about 40°C to 100°C in advance, and then the other substrate is immediately bonded thereto to obtain the laminate according to the invention. It is preferable to perform an aging treatment after the lamination. The aging temperature is preferably room temperature to 70°C, and the aging time is preferably 6 hours to 240 hours.

The coating amount of the adhesive is appropriately adjusted. In the case of the solvent type, for example, the solid content is adjusted to 1 g/m$^2$ or more and 10 g/m$^2$ or less, and preferably 1 g/m$^2$ or more and 5 g/m$^2$ or less. In the case of the solvent-free type, the coating amount of the adhesive is, for example, 1 g/m$^2$ or more and 10 g/m$^2$ or less, and preferably 1 g/m$^2$ or more and 5 g/m$^2$ or less.

(Laminated Structure)

An example of a specific form of the laminate according to the invention will be described here. Of course, the laminate according to the invention is not limited to this form.

Layer (A)/gas barrier resin layer (B)/gas barrier adhesive layer/second substrate
Layer (A)/printing layer/gas barrier resin layer (B)/gas barrier adhesive layer/second substrate
Printing layer/layer (A)/gas barrier resin layer (B)/gas barrier adhesive layer/second substrate
Layer (A)/gas barrier resin layer (B)/gas barrier adhesive layer/substrate used as intermediate layer/adhesive layer/second substrate
Layer (A)/printing layer/gas barrier resin layer (B)/gas barrier adhesive layer/substrate used as intermediate layer/adhesive layer/second substrate
Printing layer/layer (A)/gas barrier resin layer (B)/gas barrier adhesive layer/substrate used as intermediate layer/-adhesive layer/second substrate
Layer (A)/gas barrier resin layer (B)/gas barrier adhesive layer/second substrate
Layer (A)/printing layer/gas barrier resin layer (B)/gas barrier adhesive layer/second substrate
Printing layer/layer (A)/gas barrier resin layer (B)/gas barrier adhesive layer/second substrate
Layer (A)/gas barrier resin layer (B)/gas barrier adhesive layer/substrate used as intermediate layer/adhesive layer/second substrate
Layer (A)/printing layer/gas barrier resin layer (B)/gas barrier adhesive layer/substrate used as intermediate layer/adhesive layer/second substrate
Printing layer/layer (A)/gas barrier resin layer (B)/gas barrier adhesive layer/substrate used as intermediate layer/-adhesive layer/second substrate

In addition, a coating layer that imparts functions such as releasability and antistatic properties may be provided on the layer (A).

(Packaging Material)

The laminate according to the invention can be used as a multilayer packaging material for the purpose of protecting foods, pharmaceuticals, and the like. In the case of being used as a multilayer packaging material, the layer configuration of the laminate may change depending on the content, the use environment, and the use form. In addition, the packaging body according to the invention may be appropriately subjected to an easy-opening treatment or provided with a resealing unit.

For example, when a laminate having a sealant layer is taken as an example of the packaging material according to the invention, the packaging material is obtained by overlapping the surfaces of the sealant layer of the laminate so as to face each other, and then heat-sealing a peripheral end portion thereof to form a bag shape. Examples of the bag making method include a method in which the laminate according to the invention is folded or overlapped such that the surfaces of the inner layers thereof (the surfaces of the sealant layers) face each other, and the peripheral end portions thereof are heat-sealed in the form of, for example, a side surface seal type, a two-side seal type, a three-side seal type, a four-side seal type, an envelope seal type, a butt-seam seal type, a pleated seal type, a flat bottom seal type, a square bottom seal type, a gusset type, and other heat seal types. The packaging material according to the invention can take various forms depending on the content, the use environment, and the use form. A self-supporting packaging material (standing pouch) or the like can also be used. Examples of the heat sealing method include known methods such as bar sealing, rotary roll sealing, belt sealing, impulse sealing, high-frequency sealing, and ultrasonic sealing.

In the case where the layer (A) of the laminate according to the invention and the second substrate do not function as a sealant layer that serves as a heat-sealed portion when forming the packaging material, a sealant layer may be further added. As the sealant layer, an additional substrate may be bonded using the adhesive according to the invention, or an adhesive layer formed of the adhesive according to the invention may be used.

A product using the packaging material according to the invention is produced by filling the packaging material according to the invention with the content through an opening and then heat-sealing the opening. Examples of the content for filling include foods, for example, confections such as rice crackers, bean snacks, nuts, biscuits, cookies, wafers, marshmallows, pies, soft-baked cakes, candies, and snacks, staple foods such as bread, snack noodles, instant noodles, dried noodles, pasta, aseptically packaged cooked rice, Japanese rice porridge, rice porridge, packaged rice cakes, and cereal foods, agricultural products such as pickles, boiled beans, natto, miso, frozen tofu, tofu, nametake mushrooms, konjac, processed wild vegetables, jams, peanut cream, salads, frozen vegetables, and processed potatoes, processed livestock products such as hams, bacon, sausages, processed chicken products, and corned beef, processed seafood products such as fish ham and sausages, fish paste products, kamaboko, seaweed, tsukudani, bonito flakes, salted fish,

smoked salmon, and spicy mentaiko, fruit pulps such as peaches, mandarin oranges, pineapples, apples, pears, and cherries, vegetables such as corns, asparagus, mushrooms, onions, carrots, radishes, and potatoes, prepared foods such as frozen and chilled prepared foods, including hamburgers, meatballs, fried seafood, gyoza, and croquettes, dairy products such as butter, margarine, cheese, creams, instant cream powders, and infant formula, liquid seasonings, instant curry, and pet foods.

In addition, the packaging material according to the invention can also be used as various packaging materials for non-foods, and examples thereof include tobacco, disposable body warmers, pharmaceuticals such as infusion packs, liquid laundry detergents, liquid kitchen detergents, liquid bath detergents, liquid bath soaps, liquid shampoos, liquid conditioners, cosmetics such as lotions and emulsions, vacuum insulating materials, and batteries.

(Recycled Plastic)

The laminate or the packaging material can be reused as a recycled plastic.

Here, an example of a method of processing a laminated film into a recycled plastic will be described. Of course, in the invention, the method is not limited to the example, and various known recycled plastic processing methods can be applied.

The laminate or the packaging material is crushed by using a crusher or the like. The crusher is not particularly limited, and a known crusher may be used.

The crushed film pieces are physically blended by melt-kneading, solvent casting blending, latex blending, polymer complex, or the like. In particular, a melt-kneading method is generally used. Examples of an apparatus for kneading include a tumbler, a Henschel mixer, a rotary mixer, a super mixer, a ribbon tumbler, and a V blender. The crushed film pieces are melt-kneaded by such a kneading device, and then pelletized. A single-screw or multi-screw extruder is generally used for melt-kneading and pelletizing, and besides these extruders, a Banbury mixer, a roller, a co-kneader, a blast mill, a Brabender Plastograph, or the like can also be used, and these can be operated batchwise or continuously. Alternatively, instead of melt-kneading, a method may be used in which the crushed film pieces are used as a molding resin and melt-kneaded in a molding machine heating cylinder. Examples

Hereinafter, the invention will be described in more detail with reference to specific Synthesis Examples and Examples, but the invention is not limited to these Examples. Note that, in the following examples, "part" and "%" represent "part by mass" and "mass%", respectively, unless otherwise specified.

Definition of terms: the molecular weight of one unit of ammonium polyacrylate, which is the resin having a carboxy group, is 89. In general, one molecule of zinc oxide (molecular weight: 81.4), which is the polyvalent metal compound, reacts with two molecules of one unit of ammonium polyacrylate (twice the molecular weight of 89), to form a salt. A formulation blended in weight of ammonium polyacrylate: weight of zinc oxide = 178/81.4 = 100/45.7 is referred to the formulation as 1 equivalent of zinc oxide.

(Evaluation Item 1: Liquid Stability)

The produced coating agent (B) was allowed to stand for 3 hours, and was visually confirmed whether fine particles were precipitated.

(Evaluation Criteria)

A: there is no precipitation of fine particles in the coating agent
B: a small amount of fine particles precipitate in the coating agent
C: fine particles are remarkably precipitated in the coating agent

(Evaluation Item 2: Gas Barrier Property (Oxygen Permeability))

The measurement of the oxygen permeability was performed in an atmosphere at a temperature of 23°C and a humidity of 0% RH and in an atmosphere at a temperature of 23°C and a humidity of 90% RH using the oxygen permeability measurement device OX-TRAN2/21 manufactured by MOCON Co., Ltd. in accordance with JIS-K7126-2:2006 "Plastics-Film and sheeting-Determination of gas-transmission rate-Part 2: Equal-pressure method". RH represents relative humidity. Note that, the unit of the oxygen permeability is cc/day·atm·$m^2$.

(Evaluation Item 3: Gas Barrier Property (Oxygen Permeability) after Bending Test) A produced laminated film was adjusted to a size of 30 cm × 20 cm, and a bending test was performed in accordance with ASTM F392 using a Gelbo Flex Tester (Gelbo Flex Tester with BE-1006 thermostatic bath, manufactured by TESTER SANGYO CO,. LTD.). Note

that, the bending test was performed under the conditions of 440°/90 mm linear motion of 65 mm, 23°C, and 30 times of bending, and the oxygen permeability after the Gelbo Flex treatment was measured.

(Preparation of Layer (A))

A biaxially oriented polypropylene film (OPP film FOR, Futamura Chemical Co., Ltd., thickness 20 μm) was coated with an anchor coating liquid obtained by blending an acrylic coating agent (GAC-013S, DIC Corporation) and a polyisocyanate curing agent (KR-90, DIC Corporation) in a mixing ratio of 5:1 by a gravure coating method so as to have a dry thickness of about 0.05 μm, followed by drying to obtain an anchor coating layer. Thereafter, in a vacuum deposition device using an electron beam heating method, metal aluminum was vapor-deposited and an oxygen gas was introduced thereto. In this way, the layer (A) including the anchor coating layer on the OPP film and including an aluminum oxide vapor-deposited layer as an inorganic layer having a thickness of 20 nm on the anchor coating layer was formed.

(Preparation of Polyvalent Metal Compound Dispersion Liquid (z-1))

As a polyvalent metal compound dispersion liquid, 30 parts of ZnO having a primary particle diameter of 20 nm (FINEX-50 manufactured by SAKAI CHEMICAL INDUSTRY CO., LTD.), 3.8 parts of an ammonium polyacrylate aqueous solution having a weight average molecular weight of 70,000 and a pH of 7.2 (A-30SL, solid content ratio: 40%, manufactured by TOAGOSEI CO., LTD.), and 62.5 parts of water were mixed, the mixture was subjected to a dispersion treatment for 1 hour in a bead mill (Ultra Apex Mill UAM-015 manufactured by KOTOBUKI Co., Ltd.) using zirconia beads having a diameter of 0.3 mm, and then the beads were sieved to obtain a polyvalent metal compound dispersion liquid (z-1) having a solid content concentration of 31.5%.

(Preparation of Polyvalent Metal Compound Dispersion Liquid (z-2))

As a polyvalent metal compound dispersion liquid, 30 parts of ZnO having a primary particle diameter of 20 nm (FINEX-50 manufactured by SAKAI CHEMICAL INDUSTRY CO., LTD.), 7.5 parts of an ammonium polyacrylate aqueous solution having a weight average molecular weight of 70,000 and a pH of 7.2 (A-30SL, solid content ratio: 40%, manufactured by TOAGOSEI CO., LTD.), and 62.5 parts of water were mixed, the mixture was subjected to a dispersion treatment for 1 hour in a bead mill (Ultra Apex Mill UAM-015 manufactured by KOTOBUKI Co., Ltd.) using zirconia beads having a diameter of 0.3 mm, and then the beads were sieved to obtain a polyvalent metal compound dispersion liquid (z-2) having a solid content concentration of 33.0%.

(Preparation of Polyvalent Metal Compound Dispersion Liquid (z-3))

As a polyvalent metal compound dispersion liquid, 30 parts of ZnO having a primary particle diameter of 20 nm (FINEX-50 manufactured by SAKAI CHEMICAL INDUSTRY CO., LTD.), 2.5 parts of an ammonium polyacrylate aqueous solution having a weight average molecular weight of 70,000 and a pH of 7.2 (A-30SL, solid content ratio: 40%, manufactured by TOAGOSEI CO., LTD.), and 68.7 parts of water were mixed, the mixture was subjected to a dispersion treatment for 1 hour in a bead mill (Ultra Apex Mill UAM-015 manufactured by KOTOBUKI Co., Ltd.) using zirconia beads having a diameter of 0.3 mm, and then the beads were sieved to obtain a polyvalent metal compound dispersion liquid (z-3) having a solid content concentration of 31.0%.

(Preparation of Coating Agent (b-1) for (Layer B))

Water (68.32 parts), 18.7 parts of isopropyl alcohol (IPA, manufactured by Daishin-Chemical. Co. Ltd.), 10.7 parts of an ammonium polyacrylate aqueous solution having a weight average molecular weight of 720,000 and a pH of 7.7 (A-30, solid content ratio: 31%, manufactured by TOAGOSEI CO., LTD.), and 2.28 parts of the polyvalent metal compound dispersion liquid (z-1) were added and stirred for 1 hour to obtain a coating agent (b-1). Note that, at this time, the blending equivalent of ZnO (polyvalent metal compound) to the carboxy group in the ammonium salt of the resin having a carboxy group (ammonium polyacrylate) was 0.45. In addition, the mixing ratio of the resin (P2) having a weight average molecular weight of 200,000 to 10,000,000 to the resin (P1) having a weight average molecular weight of 3,000 to 200,000 was P2/P1 = 97.

(Preparation of Coating Agents (b-2 to b-24) for (Layer B))

Coating agents (b-2 to b-24) were prepared and obtained in the same manner as in b-1 except that the blending of the coating agent (b-1) was changed as shown in Tables 1 to 4. Note that, the raw materials used in Tables 1 to 4 are as

follows, and the blank indicates not blended.

Hydroxy group-containing compound (glycerin, Kanto Chemical)
Hydroxy group-containing compound (ethylene glycol, Kanto Chemical)
Hydroxy group-containing compound (SURFYNOL 104PA, Nissin Chemical Industry)
Hydroxy group-containing compound (SURFYNOL 420, Nissin Chemical Industry)
Ethanol main agent mixed solvent (SOLMIX AP-1, Nippon Alcohol Sales Co., Ltd.)

[Table 1]

| Table 1 Raw materials | Product Name | NV | b-1 | b-2 | b-3 | b-4 | b-5 | b-6 |
|---|---|---|---|---|---|---|---|---|
| Ammonium polyacrylate | A-30 | 31% | 10.70 | 10.70 | 8.34 | 10.70 | 10.70 | 10.65 |
| ZnO dispersion liquid | z-1 | 31.5% | 2.28 | 2.00 | 1.38 | 2.28 | 2.28 | 0.53 |
| ZnO dispersion liquid | z-2 | 33% | | | | | | |
| ZnO dispersion liquid | z-3 | 31% | | | | | | |
| Hydroxy group-containing compound | Glycerin | 100% | | | | 0.17 | 0.46 | |
| Hydroxy group-containing compound | Ethylene glycol | 100% | | | | | | |
| Isopropyl alcohol | IPA | 0% | 18.70 | 25.25 | 18.90 | 18.50 | 18.00 | 20.00 |
| Ethanol main agent mixed solvent | SOLMIX AP-1 | 0% | | | | | | |
| Water | Water | 0% | 68.32 | 62.05 | 71.38 | 68.35 | 68.56 | 68.82 |
| Total | | | 100.00 | 100.00 | 100.00 | 100.00 | 100.00 | 100.00 |
| Blending equivalent of ZnO | | | 0.45 | 0.40 | 0.35 | 0.45 | 0.45 | 0.11 |
| P2/P1 | | | 97 | 111 | 125 | 97 | 97 | 415 |
| Proportion of hydroxy group-containing compound in solid content | | | 0% | 0% | 0% | 4% | 10% | 0% |

[Table 2]

| Table 2 Raw materials | Product Name | NV | b-7 | b-8 | b-9 | b-10 | b-11 | b-12 |
|---|---|---|---|---|---|---|---|---|
| Ammonium polyacrylate | A-30 | 31% | 12.00 | 10.00 | 13.00 | 12.00 | 10.70 | 20.00 |
| ZnO dispersion liquid | z-1 | 31.5% | | | | | 2.40 | |
| ZnO dispersion liquid | z-2 | 33% | 1.70 | 1.90 | | | | |
| ZnO dispersion liquid | z-3 | 31% | | | 1.50 | 2.50 | | 0.90 |
| Hydroxy group-containing compound | Glycerin | 100% | | | | 0.04 | 0.07 | 0.62 |
| Hydroxy group-containing compound | Ethylene glycol | 100% | | 0.43 | | | 0.07 | |
| Isopropyl alcohol | IPA | 0% | 15.00 | 12.00 | 21.00 | 10.00 | 5.00 | 6.00 |

(continued)

| Table 2 Raw materials | Product Name | NV | b-7 | b-8 | b-9 | b-10 | b-11 | b-12 |
|---|---|---|---|---|---|---|---|---|
| Ethanol main agent mixed solvent | SOLMIX AP-1 | 0% | | | | | | |
| Water | Water | 0% | 71.30 | 75.67 | 64.50 | 75.46 | 81.76 | 72.48 |
| Total | | | 100.00 | 100.00 | 100.00 | 100.00 | 100.00 | 100.00 |
| Blending equivalent of ZnO | | | 0.30 | 0.40 | 0.24 | 0.44 | 0.47 | 0.10 |
| P2/P1 | | | 73 | 54 | 269 | 149 | 92 | 689 |
| Proportion of hydroxy group-containing compound in solid content | | | 0% | 11% | 0% | 1% | 3% | 9% |

[Table 3]

| Table 3 Raw materials | Product Name | NV | b-13 | b-14 | b-15 | b-16 | b-17 | b-18 |
|---|---|---|---|---|---|---|---|---|
| Ammonium polyacrylate | A-30 | 31% | 10.70 | 8.34 | 13.90 | 10.70 | 8.34 | 13.90 |
| ZnO dispersion liquid | z-1 | 31.5% | | | | | | |
| ZnO dispersion liquid | z-2 | 33% | 2.30 | 1.40 | 2.30 | 2.30 | 1.40 | 2.30 |
| ZnO dispersion liquid | z-3 | 31% | | | | | | |
| Hydroxy group-containing compound | Glycerin | 100% | | | | 0.20 | 0.15 | 0.30 |
| Hydroxy group-containing compound | Ethylene glycol | 100% | | | | | | |
| Isopropyl alcohol | IPA | 0% | | | | | | |
| Ethanol main agent mixed solvent | SOLMIX AP-1 | 0% | 25.50 | 25.50 | 25.00 | 25.50 | 25.50 | 25.00 |
| Water | Water | 0% | 61.50 | 64.76 | 58.80 | 61.30 | 64.61 | 58.50 |
| Total | | | 100.00 | 100.00 | 100.00 | 100.00 | 100.00 | 100.00 |
| Blending equivalent of ZnO | | | 0.45 | 0.36 | 0.35 | 0.45 | 0.36 | 0.35 |
| P2/P1 | | | 96 | 123 | 125 | 96 | 123 | 125 |
| Proportion of hydroxy group-containing compound in solid content | | | 0% | 0% | 0% | 5% | 5% | 6% |

[Table 4]

| Table 4 Raw materials | Product Name | NV | b-19 | b-20 | b-21 | b-22 | b-23 | b-24 |
|---|---|---|---|---|---|---|---|---|
| Ammonium polyacrylate | A-30 | 31% | 10.70 | 10.00 | 8.00 | 11.00 | 10.50 | 10.70 |
| ZnO dispersion liquid | z-1 | 31.5% | 2.28 | 2.00 | 1.80 | 2.40 | 1.50 | 2.00 |
| ZnO dispersion liquid | z-2 | 33% | | | | | | |
| ZnO dispersion liquid | z-3 | 31% | | | | | | |

(continued)

| Table 4 Raw materials | Product Name | NV | b-19 | b-20 | b-21 | b-22 | b-23 | b-24 |
|---|---|---|---|---|---|---|---|---|
| ZnO | FINEX-50 | 100% | | | | | | |
| Hydroxy group-containing compound | Glycerin | 100% | | | | 0.34 | 0.16 | 0.17 |
| Hydroxy group-containing compound | Ethylene glycol | 100% | | | | | 0.16 | 0.17 |
| Hydroxy group-containing compound | SURFYNOL 104PA | 50% | 0.007 | 0.004 | 0.050 | 0.007 | | 0.007 |
| Hydroxy group-containing compound | SURFYNOL 420 | 100% | | | | | 0.016 | 0.007 |
| Isopropyl alcohol | IPA | 0% | 18.50 | 18.50 | 18.50 | 18.50 | 18.50 | 18.50 |
| Ethanol main agent mixed solvent | SOLMIX AP-1 | 0% | | | | | | |
| Water | Water | 0% | 68.51 | 69.50 | 71.65 | 67.75 | 69.16 | 68.46 |
| Total | | | 100.00 | 100.00 | 100.00 | 100.00 | 100.00 | 100.00 |
| Blending equivalent of ZnO | | | 0.45 | 0.42 | 0.48 | 0.46 | 0.30 | 0.40 |
| P2/P1 | | | 97 | 103 | 92 | 95 | 145 | 111 |
| Proportion of hydroxy group-containing compound in solid content | | | 0.08% | 0.05% | 0.81% | 7.70% | 8.45% | 8.02% |

(Preparation of Coating Agent (h-1) for Comparative Example (B Layer))

Water (70.1 parts), 18.0 parts of isopropyl alcohol (IPA), 11.0 parts of an ammonium polyacrylate aqueous solution having a weight average molecular weight of 720,000 and a pH of 7.7 (A-30, solid content ratio: 31%, manufactured by TOAGOSEI CO., LTD.), and 0.7 parts of glycerin were mixed, the mixture was subjected to a dispersion treatment for 1 hour in a bead mill (Ultra Apex Mill UAM-015 manufactured by KOTOBUKI Co., Ltd.) using zirconia beads having a diameter of 0.3 mm, and then the beads were sieved to obtain a coating agent (h-1).

(Preparation of Coating Agents (h-2 to h-4) for Comparative Example (B Layer))

Coating agents (h-2 to h-4) were prepared and obtained in the same manner as in h-1 except that the blending of the coating agent (h-1) was changed as shown in Table 5.

[Table 5]

| Table 5 Raw materials | Product Name | NV | h-1 | h-2 | h-3 | h-4 |
|---|---|---|---|---|---|---|
| Ammonium polyacrylate | A-30 | 31% | 11.00 | 5.00 | 11.00 | 11.00 |
| Ammonium polyacrylate | A-30SL | 40% | | 5.00 | | |
| ZnO dispersion liquid | z-1 | 31.5% | | 2.00 | 0.30 | 6.00 |
| ZnO dispersion liquid | z-2 | 33% | | | | |
| ZnO dispersion liquid | z-3 | 31% | | | | |
| ZnO | FINEX-50 | 100% | 0.70 | | | |
| Hydroxy group-containing compound | Glycerin | 100% | 0.17 | | | |
| Hydroxy group-containing compound | Ethylene glycol | 100% | | | | |

(continued)

| Table 5 Raw materials | Product Name | NV | h-1 | h-2 | h-3 | h-4 |
|---|---|---|---|---|---|---|
| Isopropyl alcohol | IPA | 0% | 18.00 | 18.00 | 18.00 | 18.00 |
| Ethanol main agent mixed solvent | SOLMIX AP-1 | 0% | | | | |
| Water | Water | 0% | 70.13 | 70.00 | 70.70 | 65.00 |
| Total | | | 100.00 | 100.00 | 100.00 | 100.00 |
| Blending equivalent of ZnO | | | 0.45 | 0.37 | 0.06 | 1.15 |
| P2/P1 | | | - | 1 | 758 | 38 |
| Proportion of hydroxy group-containing compound in solid content | | | 3.98% | 0.00% | 0.00% | 0.00% |

(Preparation of Gas Barrier Laminate)

The prepared layer (A) was coated with any of the coating agents (b-1) to (b-24) and (h-1) to (h-4) using a bar coater #3, and dried for 1 minute in a hot air dryer set at 80°C to form the layer (B), thereby obtaining a gas barrier laminate.

(Preparation of Packaging Material)

DIC-DRY LX-830 and KW-75 (both manufactured by DIC Corporation) were blended at a blending ratio of 10/1.5, and ethyl acetate was blended such that the nonvolatile content was 25% to obtain an adhesive. Thereafter, the layer (B) of the prepared gas barrier laminate was coated with the adhesive using a bar coater #8, and the dilution solvent was volatilized using a dryer set at a temperature of 50°C, followed by bonding to a non-oriented polypropylene film (CPP film, P1128, TOYOBO CO., LTD.). Aging was performed at 40°C for 3 days to obtain a packaging material [layer (A) (substrate: OPP film)/layer (B)/adhesive/CPP film].

The results are shown in Tables 6 to 10.

[Table 6]

| Table 6 | Example 1 | Example 2 | Example 3 | Example 4 | Example 5 | Example 6 |
|---|---|---|---|---|---|---|
| Coating agent | b-1 | b-2 | b-3 | b-4 | b-5 | b-6 |
| Liquid stability | A | A | A | A | A | A |
| Oxygen permeability at 0% RH | 0.1 | 0.1 | 0.1 | 0.1 | 0.1 | 0.2 |
| Oxygen permeability at 90% RH | 0.3 | 0.3 | 0.4 | 0.4 | 0.5 | 0.7 |
| Oxygen permeability at 0% RH after bending test | 0.1 | 0.1 | 0.1 | 0.1 | 0.1 | 0.2 |
| Oxygen permeability at 90% RH after bending test | 0.6 | 0.6 | 0.7 | 0.5 | 0.5 | 0.9 |

[Table 7]

| Table 7 | Example 7 | Example 8 | Example 9 | Example 10 | Example 11 | Example 12 |
|---|---|---|---|---|---|---|
| Coating agent | b-7 | b-8 | b-9 | b-10 | b-11 | b-12 |
| Liquid stability | A | A | A | A | A | A |
| Oxygen permeability at 0% RH | 0.1 | 0.1 | 0.1 | 0.1 | 0.1 | 0.2 |
| Oxygen permeability at 90% RH | 0.4 | 0.5 | 0.6 | 0.4 | 0.5 | 0.8 |
| Oxygen permeability at 0% RH after bending test | 0.1 | 0.1 | 0.1 | 0.1 | 0.1 | 0.2 |

(continued)

| Table 7 | Example 7 | Example 8 | Example 9 | Example 10 | Example 11 | Example 12 |
|---|---|---|---|---|---|---|
| Oxygen permeability at 90% RH after bending test | 0.7 | 0.5 | 0.8 | 0.5 | 0.5 | 0.8 |

[Table 8]

| Table 8 | Example 13 | Example 14 | Example 15 | Example 16 | Example 17 | Example 18 |
|---|---|---|---|---|---|---|
| Coating agent | b-13 | b-14 | b-15 | b-16 | b-17 | b-18 |
| Liquid stability | A | A | A | A | A | A |
| Oxygen permeability at 0% RH | 0.1 | 0.1 | 0.1 | 0.1 | 0.1 | 0.1 |
| Oxygen permeability at 90% RH | 0.3 | 0.4 | 0.2 | 0.4 | 0.4 | 0.3 |
| Oxygen permeability at 0% RH after bending test | 0.1 | 0.1 | 0.1 | 0.1 | 0.1 | 0.1 |
| Oxygen permeability at 90% RH after bending test | 0.6 | 0.7 | 0.6 | 0.5 | 0.6 | 0.5 |

[Table 9]

| Table 9 | Example 19 | Example 20 | Example 21 | Example 22 | Example 23 | Example 24 |
|---|---|---|---|---|---|---|
| Coating agent | b-19 | b-20 | b-21 | b-22 | b-23 | b-24 |
| Liquid stability | A | A | A | A | A | A |
| Oxygen permeability at 0% RH | 0.1 | 0.1 | 0.1 | 0.1 | 0.1 | 0.1 |
| Oxygen permeability at 90% RH | 0.3 | 0.3 | 0.2 | 0.3 | 0.4 | 0.4 |
| Oxygen permeability at 0% RH after bending test | 0.1 | 0.1 | 0.1 | 0.1 | 0.1 | 0.1 |
| Oxygen permeability at 90% RH after bending test | 0.4 | 0.4 | 0.3 | 0.4 | 0.5 | 0.5 |

[Table 10]

| Table 10 | Comparative Example 1 | Comparative Example 2 | Comparative Example 3 | Comparative Example 4 |
|---|---|---|---|---|
| Coating agent | h-1 | h-2 | h-3 | h-4 |
| Liquid stability | C | B | A | A |
| Oxygen permeability at 0% RH | - | 0.7 | 0.3 | 0.1 |
| Oxygen permeability at 90% RH | - | 2.8 | 2.5 | 0.2 |
| Oxygen permeability at 0% RH after bending test | - | 0.7 | 0.3 | 0.1 |
| Oxygen permeability at 90% RH after bending test | - | 3.0 | 3.3 | 2.0 |

In Examples 1 to 24, a coating agent having good liquid stability has been produced. On the other hand, the liquid

stability is poor in Comparative Example 1 in which the resin having a carboxy group does not contain the resin (P1) having a weight average molecular weight of 3,000 to 200,000 and is composed of only the resin (P2) having a weight average molecular weight of 200,000 to 10,000,000. In addition, the liquid stability is poor in Comparative Example 2 in which P1:P2 is not in the range of 1:10 to 1:2,000.

In Examples 1 to 24, a gas barrier laminate having a good gas barrier property and a good gas barrier property after the bending test has been produced. On the other hand, in Comparative Examples 2 to 4, no sufficient gas barrier property or no sufficient gas barrier property after the bending test are obtained.

From the above results, it is found that the gas barrier laminate and the packaging material having the configuration of the invention have a good gas barrier property.

(Evaluation Item 4: Retort Treatment Test)

Using the gas barrier laminate, a pouch having a size of 210 mm in length × 150 mm in width and having three sides as seal portions was prepared, and was filled with water as a content. Thereafter, a retort sterilization treatment was performed at 121°C for 30 minutes, and it was visually checked whether the pouch was peeled off.

(Evaluation Criteria)

A: there is no peeling off in the pouch
B: there is peeling off in a part of the pouch
C: the pouch is remarkably peeled off

(Preparation of Coating Agents (b-25 to b-31) for (Layer B))

Coating agents (b-25 to b-31) were prepared and obtained in the same manner as in b-1 except that the blending of the coating agent (b-1) was changed as shown in Table 11. Note that, the raw materials used in Table 11 are as follows, and the blank indicates not blended.

Silicon compound acetone diluted solution (KBM-6803, Shin-Etsu Chemical Co., Ltd.)
Silicon compound acetone diluted solution (KBE-903, Shin-Etsu Chemical Co., Ltd.)

[Table 11]

| Table 11 Raw materials | Product Name | NV | b-25 | b-26 | b-27 | b-28 | b-29 | b-30 | b-31 |
|---|---|---|---|---|---|---|---|---|---|
| Ammonium polyacrylate | A-30 | 31% | 10.70 | 10.70 | 10.00 | 10.70 | 10.70 | 10.70 | 10.70 |
| ZnO dispersion liquid | z-1 | 32% | 2.30 | 2.00 | 2.00 | 2.30 | 2.30 | 2.00 | 1.70 |
| ZnO dispersion liquid | z-2 | 33% | | | | | | | |
| ZnO dispersion liquid | z-3 | 31% | | | | | | | |
| Hydroxy group-containing compound | Glycerin | 100% | | | 0.20 | 0.10 | | 0.23 | 0.23 |
| Hydroxy group-containing compound | Ethylene glycol | 100% | | | | 0.10 | | | 0.17 |

(continued)

| Table 11 Raw materials | Product Name | NV | b-25 | b-26 | b-27 | b-28 | b-29 | b-30 | b-31 |
|---|---|---|---|---|---|---|---|---|---|
| Hydroxy group-containing compound | SURFYNOL 104PA | 50% | | | | | 0.007 | 0.013 | 0.013 |
| Hydroxy group-containing compound | SURFYNOL 420 | 100% | | | | | | | 0.007 |
| Isopropyl alcohol | IPA | 0% | 19.00 | 19.00 | 19.00 | 19.00 | 9.00 | 9.00 | 9.00 |
| Ethanol main agent mixed solvent | SOLMIX AP-1 | 0% | | | | | | | |
| Silicon compound acetone diluted solution | KBM-6803 | 10% | 6.00 | 12.00 | 9.00 | 6.00 | 12.00 | 9.00 | 6.00 |
| Silicon compound acetone diluted solution | KBE-903 | 10% | | | | 6.00 | | | 6.00 |
| Water | Water | 0% | 62.00 | 56.30 | 59.80 | 55.80 | 65.99 | 69.05 | 66.18 |
| Total | | | 100.00 | 100.00 | 100.00 | 100.00 | 100.00 | 100.00 | 100.00 |
| Blending equivalent of ZnO | | | 0.45 | 0.40 | 0.42 | 0.45 | 0.45 | 0.40 | 0.34 |
| P2/P1 | | | 96 | 111 | 103 | 96 | 96 | 111 | 130 |
| Proportion of hydroxy group-containing compound in solid content | | | 0.00% | 0.00% | 4.17% | 3.70% | 0.06% | 4.72% | 7.56% |
| Proportion of silicon compound contained in solid content | | | 13.02% | 23.45% | 18.75% | 22.19% | 23.03% | 17.80% | 22.07% |

(Preparation of Gas Barrier Laminate)

The prepared layer (A) was coated with any of the coating agents (b-25) to (b-31) using a bar coater #3, and dried for 1 minute in a hot air dryer set at 80°C to form the layer (B), thereby obtaining a gas barrier laminate.

(Preparation of Packaging Material)

DIC-DRY LX-703VL and KR-90 (both manufactured by DIC Corporation) were blended at a blending ratio of

15/1, and ethyl acetate was blended such that the nonvolatile content was 25% to obtain an adhesive. Thereafter, the layer (B) of the prepared gas barrier laminate was coated with the adhesive using a bar coater #8, and the dilution solvent was volatilized using a dryer set at a temperature of 50°C, followed by bonding to a non-oriented polypropylene film (CPP film, ZK207, manufactured by TORAY ADVANCED FILM CO., LTD.). Aging was performed at 40°C for 3 days to obtain a packaging material [layer (A) (substrate: OPP film)/layer (B)/adhesive/CPP film].

The results are shown in Table 12.

[Table 12]

| Table 12 | Example 25 | Example 26 | Example 27 | Example 28 | Example 29 | Example 30 | Example 31 |
|---|---|---|---|---|---|---|---|
| Coating agent | b-25 | b-26 | b-27 | b-28 | b-29 | b-30 | b-31 |
| Liquid stability | A | A | A | A | A | A | A |
| Oxygen permeability at 0% RH | 0.1 | 0.1 | 0.1 | 0.2 | 0.1 | 0.1 | 0.1 |
| Oxygen permeability at 90% RH | 0.3 | 0.3 | 0.3 | 0.3 | 0.3 | 0.3 | 0.3 |
| Oxygen permeability at 0% RH after bending test | 0.1 | 0.1 | 0.2 | 0.1 | 0.1 | 0.1 | 0.1 |
| Oxygen permeability at 90% RH after bending test | 0.7 | 0.5 | 0.4 | 0.4 | 0.5 | 0.5 | 0.5 |
| Appearance of pouch after retort | A | A | A | A | A | A | A |

In Examples 25 to 31, a gas barrier laminate having a good gas barrier property, a good gas barrier property after the bending test, and a good appearance of the pouch after retort has been produced.

From the above results, it is found that the gas barrier laminate and the packaging material having the configuration of the invention have a good gas barrier property and retort resistance.

## Claims

1. A gas barrier laminate comprising:

    (A) a layer (A) including an olefin-based substrate having an inorganic layer formed on at least one surface thereof; and
    (B) a layer (B) containing an ammonium salt of a resin having a carboxy group and 0.1 to 0.5 chemical equivalents of a polyvalent metal compound with respect to the carboxy group in the ammonium salt of the resin having a carboxy group, wherein
    the layer (B) contains an ammonium salt of a resin (P1) having a carboxy group and a weight average molecular weight of 3,000 to 200,000 and an ammonium salt of a resin (P2) having a carboxy group and a weight average molecular weight of 200,000 to 10,000,000 in a range of P2/P1 = 10 to 2,000.

2. The gas barrier laminate according to claim 1, wherein the layer (B) contains a hydroxy group-containing compound having a boiling point of 120°C or higher in an amount of 0.04 mass% to 15 mass% with respect to a solid content of the layer (B).

3. The gas barrier laminate according to claim 1, wherein the layer (B) contains 10 mass% to 30 mass% of at least one kind of compound (S) selected from the group consisting of a silicon compound represented by a general formula (s1) and a hydrolysate thereof,

    $(R^1O)_3Si\text{-}(CH_2)_n\text{-}R^2$ ...... (s1),

in the general formula (s1), $R^1$ represents an alkyl group, $R^2$ represents an organic group having an epoxy group or an amino group, and n represents an integer of 1 to 10.

**4.** The gas barrier laminate according to claim 1, wherein the inorganic layer in the layer (A) is formed by either a vapor deposition treatment or a sputtering treatment.

**5.** The gas barrier laminate according to claim 1, wherein the inorganic layer in the layer (A) is formed of one or more kinds of inorganic substances selected from the group consisting of aluminum oxide, silicon oxide, aluminum, zinc oxide, and magnesium oxide.

**6.** A packaging material comprising the gas barrier laminate according to any one of claims 1 to 5.

**7.** A packaging material obtained by laminating the gas barrier laminate according to any one of claims 1 to 5 and a second substrate using an adhesive.

## INTERNATIONAL SEARCH REPORT

International application No. **PCT/JP2024/036219**

**A. CLASSIFICATION OF SUBJECT MATTER**

***B32B 27/32***(2006.01)i; ***B65D 65/40***(2006.01)i
FI: B32B27/32 C; B65D65/40 D

According to International Patent Classification (IPC) or to both national classification and IPC

**B. FIELDS SEARCHED**

Minimum documentation searched (classification system followed by classification symbols)

B32B27/32; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-193509 A (TOPPAN PRINTING CO., LTD.) 17 November 2016 (2016-11-17) claims, paragraphs [0013]-[0015], examples | 1-7 |
| A | WO 2021/039559 A1 (DIC CORPORATION) 04 March 2021 (2021-03-04) claims, examples | 1-7 |
| A | JP 2022-090978 A (MITSUI CHEMICALS TOHCELLO INC.) 20 June 2022 (2022-06-20) claims, examples | 1-7 |
| A | JP 2022-090980 A (MITSUI CHEMICALS TOHCELLO INC.) 20 June 2022 (2022-06-20) claims, examples | 1-7 |
| A | JP 2020-023130 A (TOPPAN PRINTING CO., LTD.) 13 February 2020 (2020-02-13) claims, examples | 1-7 |

☐ Further documents are listed in the continuation of Box C. ☑ See patent family annex.

* Special categories of cited documents:

"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 December 2024** | **07 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2024/036219**

| Patent document cited in search report | Publication date (day/month/year) | Patent family member(s) | Publication date (day/month/year) |
|---|---|---|---|
| JP 2016-193509 A | 17 November 2016 | WO 2016/158444 A1 | |
| WO 2021/039559 A1 | 04 March 2021 | CN 114206612 A | |
| JP 2022-090978 A | 20 June 2022 | (Family: none) | |
| JP 2022-090980 A | 20 June 2022 | (Family: none) | |
| JP 2020-023130 A | 13 February 2020 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014094972 A